# FASCICULE DE BREVET EUROPEEN

(11) **EP 2 391 997 B1**
(45) Date de publication et mention de la délivrance du brevet: **07.03.2018**
(21) Numéro de dépôt: 10707580.6
(22) Date de dépôt: 25.01.2010
(51) Int. Cl.: G09B 23/28, G09B 23/30

(54) **DISPOSITIF PEDAGOGIQUE D'INCISIONS ET DE SUTURES**
PÄDAGOGISCHE EINRICHTUNG FÜR EINSCHNITTE UND NAHTEN
PEDAGOGICAL DEVICE FOR INCISIONS AND STITCHES

(30) Priorité: 27.01.2009 FR 0950489
(43) Date de publication de la demande: 07.12.2011
(73) Titulaire: Mousques, Thierry, 75116 Paris (FR)
(72) Inventeur: Mousques, Thierry, 75116 Paris (FR)
(74) Mandataire: Lebkiri, Alexandre
(86) Numéro de dépôt international: PCT/FR2010/050106
(87) Numéro de publication internationale: WO 2010/086542

(56) Documents cités:
- DE-U1- 9 400 136
- US-A- 4 115 922
- US-A1- 2007 166 665
- US-A1- 2007 178 429

## Description

La présente invention se rapporte à un dispositif pédagogique d'incisions et de sutures.

Plus particulièrement, la présente invention concerne un dispositif pédagogique d'incisions et de sutures permettant de s'exercer à la réalisation d'incisions et de sutures pratiquées en chirurgie humaine ou animale et plus précisément en chirurgie dentaire.

Le succès d'une intervention chirurgicale dépend, en grande partie, de l'exécution minutieuse des incisions et des sutures réalisées.

En effet, lors d'une intervention chirurgicale, la première étape consiste à réaliser une incision précise et à la terminer par des sutures.

Une fois son intervention finalisée, le praticien doit réaliser une fermeture précise et atraumatique de la plaie. Les sutures terminent l'intervention. Ces dernières permettent de positionner correctement les lambeaux de la plaie et doivent assurer leur parfaite adaptation pour notamment favoriser la cicatrisation et réduire les complications postopératoires.

Les multiples techniques d'incisions et de sutures sont acquises uniquement par la pratique et représentent les étapes essentielles de la chirurgie.

De ce fait, les praticiens et étudiants s'exercent, autant que faire se peut, sur des dispositifs pédagogiques formés généralement par des modèles en matière plastique qui sont recouverts d'un élastomère permettant de simuler des tissus biologiques. Ces tissus biologiques sont classiquement réalisées par des procédés de moulage de type injection, compression ou roto-moulage.

La complexité de fabrication de ces tissus biologiques, se répercute nécessairement sur le prix de vente d'un tel dispositif pédagogique. Par conséquent, les Universités possèdent une infime quantité de dispositif pédagogique. Dès lors, force est de constater que de nombreux praticiens débutent leur carrière sans avoir bénéficié d'une expérience pratique convenable ex-vivo.

En outre, il n'est pas rare que certains échecs en chirurgie soient dus à des incisions et/ou des sutures mal conçues ayant pour conséquence une fermeture de la plaie peu précise génératrice d'infection ou de complications.

Par ailleurs, les matériaux utilisés pour la fabrication des tissus biologiques des dispositifs pédagogiques actuels possèdent une importante résistance à la perforation. De ce fait, les étudiants ou praticiens peuvent se piquer voire se couper durant leur apprentissage.

Dans ce contexte, l'invention vise à proposer un dispositif permettant de s'affranchir des problèmes précités de façon à procurer au corps professoral, estudiantin, médical, dentaire et vétérinaire des dispositifs pédagogiques peu coûteux et reproduisant dans des conditions favorables l'anatomie de façon à ce que les futurs praticiens et les praticiens, puissent bénéficier d'un enseignement pratique adapté.

En outre, l'invention vise également à diminuer le nombre d'accidents corporels se produisant lors de la phase d'apprentissage.

A cette fin, l'objet de l'invention porte sur un dispositif pédagogique d'incisions et de sutures pour s'exercer aux différentes techniques pratiquées en chirurgie caractérisé en ce que ledit dispositif comporte :
- une barre présentant une partie supérieure ayant une surface de forme convexe modélisant un élément anatomique ;
- une feuille recouvrant ladite barre ; ladite feuille étant réalisée dans un matériau possédant une texture pour la simulation d'un tissu biologique.

Par soucis de clarté, on entend par élément anatomique un os, un vaisseau, une artère, un maxillaire supérieur ou une mandibule.

En outre, on entend par matériau de ladite feuille, un matériau transperçable, élastique et résistant à la déchirure. Ce matériau peut être constitué d'élastomère, de skaï, de tissu, de plastique ou de tout autre matériau.

Outre les caractéristiques principales qui viennent d'être mentionnées dans le paragraphe précédent, le dispositif selon l'invention peut présenter une ou plusieurs caractéristiques supplémentaires ci-dessous, considérées individuellement ou selon toutes les combinaisons techniquement possibles :
- Ledit dispositif comporte au moins un plot disposé sur ladite partie supérieure de ladite barre ou sur une face latérale de ladite barre ;
- Ledit dispositif comporte une plaque support, ladite barre étant fixée sur ladite plaque support ;
- Ledit dispositif comporte une plaque support, ladite barre étant montée amovible sur ladite plaque support ;
- le matériau de ladite feuille peut être choisi parmi les matériaux suivants :
   - élastomère ;
   - skaï ;
   - tissu ; ou
   - plastique ;
- ladite barre comporte au moins un trou pour insérer ledit au moins un plot ;
- ledit au moins un plot est fixé sur ladite barre ;
- ledit au moins un plot est monté amovible sur ladite barre ;
- ledit au moins un plot est monobloc avec ladite barre ;
- ladite feuille possède une épaisseur comprise entre 0,1 et 5 mm et préférentiellement de l'ordre de 0,7 mm ;
- ladite au moins une feuille est montée amovible sur ladite barre ;
- ladite barre, ladite plaque support et ledit au moins un plot sont monobloc.

D'autres caractéristiques et avantages de l'invention ressortiront clairement de la description qui en est donnée ci-dessous, à titre indicatif et nullement limitatif, de modes de réalisation faisant référence aux figures annexées ci-jointes sur lesquelles :
- La figure 1 représente un exemple de dispositif conforme à l'invention.
- La figure 2 représente un exemple supplémentaire de dispositif selon l'invention.
- La figure 3 représente un exemple de dispositif stabilisé conforme à l'invention.
- La figure 4 représente un exemple d'un maxillaire ou mandibule utilisé dans le dispositif selon l'invention.

Pour des raisons de clarté, les éléments apparaissant sur différentes figures ont été désignés par des références similaires. De même, seuls les éléments utiles pour la compréhension de l'invention ont été représentés, et ceci sans respect de l'échelle et de manière schématique.

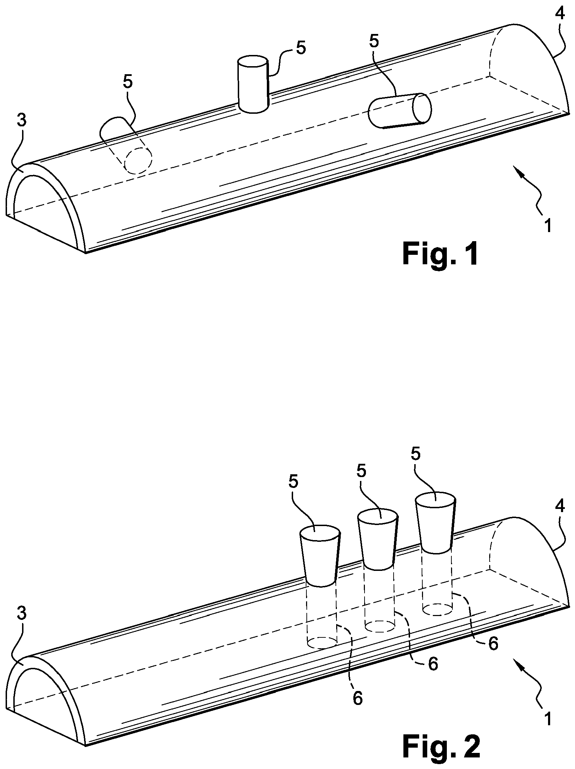

Sur la figure 1 est représenté un dispositif 1 pédagogique d'incisions et de sutures pour s'exercer aux différentes techniques d'incisions et de sutures pratiquées en chirurgie, dénommé pour la suite de la description dispositif 1, comportant :
- une barre 4 formant un os, un maxillaire supérieur ou une mandibule ;
- une feuille 3 possédant des propriétés analogues à celles d'un quelconque tissu biologique comme par exemple une gencive ; et
- trois plots 5, comme par exemple des pions, formant des modèles de dents.

La barre 4 telle qu'illustrée en figure 1 est une barre droite dont la partie inférieure est sensiblement rectangulaire et la partie supérieure est bombée avec une surface de forme convexe (ici sensiblement circulaire). Il est entendu que cette géométrie n'est pas limitative. Ainsi, la section de cette barre 4 peut être circulaire, rectangulaire, trapézoïdale, triangulaire ou tout autre type de forme géométrique. De même, cette dernière peut posséder une partie supérieure de forme plate, convexe, triangulaire ou autre.

Cette barre 4 permet de modéliser un os, comme par exemple un maxillaire supérieur ou une mandibule. Pour ce faire, le matériau utilisé est résistant à la déformation et peut notamment être un polymère, un métal, du bois ou tout autre type de matériau.

La barre 4 est recouverte d'une feuille 3 modélisant un tissu biologique comme par exemple une gencive dont l'épaisseur est comprise entre 0,1 et 5 mm. Préférentiellement, cette épaisseur est de l'ordre de 0,7 mm.

Cette feuille 3 peut être fixée sur la barre 4 par tout type de moyen, tel que par exemple, par soudure, par collage, par vissage, par aimantation, etc....

La feuille 3 possède des propriétés analogues à celles de la peau, des vaisseaux ou des gencives autorisant, d'une part, son incision à l'aide d'un instrument chirurgical et/ou, d'autre part, sa perforation à l'aide d'un instrument filiforme de type aiguille.

En outre, le dispositif 1 selon l'invention comporte trois plots 5 permettant de modéliser les dents se trouvant habituellement sur le maxillaire supérieur et la mandibule. Il est entendu que le nombre de plots 5 est donné ici à titre d'exemple.

Ces plots 5 sont représentatifs des dents humaines ou animales formées, par exemple, par des pions, des clous ou des vis. Les plots 5 peuvent être réalisés en bois, composite, faïence, métal ou tout autre type de matériau. En outre, ces derniers peuvent être de forme oblongue, triangulaire, rectangulaire ou autre.

Lorsque les plots 5 représentent des dents, ils peuvent être situés sur la partie supérieure de la barre 4 en conformité avec l'anatomie humaine ou animale mais on peut également envisager que ces derniers soient positionnés sur les faces latérales de la barre 4. De manière générale, ces plots 5 peuvent être positionnés de façon perpendiculaire ou inclinée.

Une possibilité supplémentaire offerte par l'invention consiste à ajouter différents éléments sur la barre 4, lesquels peuvent être représentatifs d'un vaisseau sanguin, d'un nerf ou tout autre type d'élément anatomique.

Dans l'exemple précité, les plots 5 sont assemblés sur la barre 4 par collage, vissage ou par tout autre moyen permettant la solidarisation des plots 5 et de la barre 4. Il est entendu que ces plots 5 et la barre 4 peuvent également former une seule et unique pièce c'est-à-dire être monobloc.

En d'autres termes, tel qu'illustré sur la figure 1, le dispositif 1 représente un élément anatomique tel qu'une mâchoire partiellement édentée permettant principalement aux étudiants et praticiens de s'exercer à la pratique chirurgicale.

Comparativement à la figure 1, est représentée sur la figure 2 une variante supplémentaire de l'invention comportant également :
- la barre 4 formant le maxillaire supérieur ou la mandibule ;
- la feuille 3 possédant des propriétés analogues à celles d'un quelconque tissu biologique comme par exemple la gencive ; et
- trois plots 5, comme par exemple des pions, formant des modèles de dents. La forme conique des plots 5 permet notamment de modéliser des couronnes dentaires.

La barre 4 et la feuille 3 sont perforées de façon similaire afin d'autoriser le positionnement des plots 5 dans des trous 6.

Par conséquent, les plots 5 peuvent être emboîtés, fixés puis retirés.

Particulièrement, un tel agencement confère à l'utilisateur la possibilité de modéliser une mâchoire dentée, édentée et/ou perforée. Plus précisément, l'utilisateur peut simuler la présence ou l'absence de dents (les plots 5) au travers de la gencive (la feuille 3) ou de façon plus générale, l'utilisateur peut simuler toute sorte de plaie ou déchirure tissulaire.

Ces trous 6 peuvent être situés sur les faces inférieure et supérieure et/ou sur les faces latérales de la barre 4.

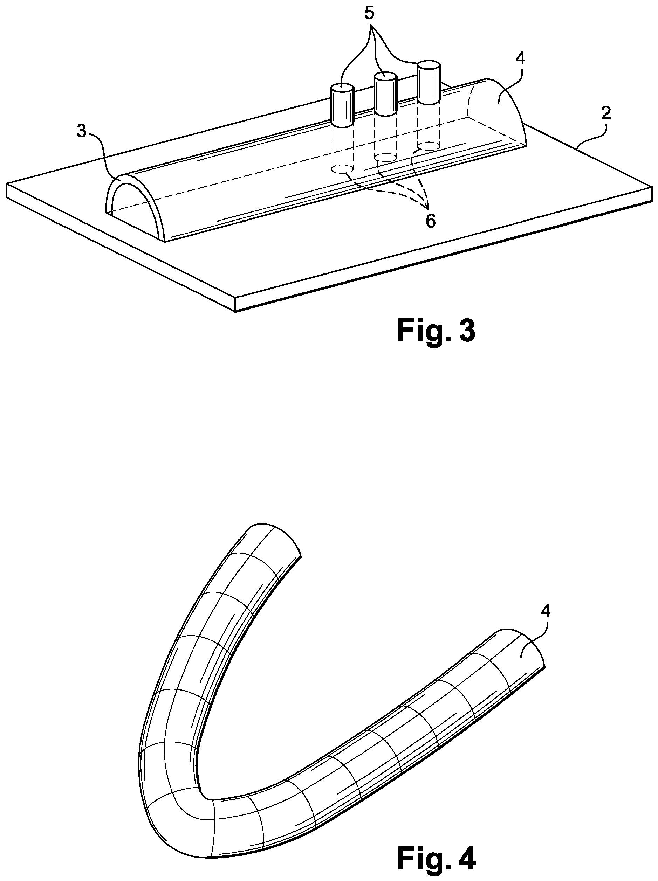

Une possibilité supplémentaire offerte par l'invention est illustrée figure 3. Comparativement aux figures 1 et 2 l'invention comporte, en outre, une plaque support 2 assurant la stabilité de la barre 4.

A titre d'exemple et de façon non limitative, la plaque support 2 peut être formée par une plaque, un établi, un étau, une table ou tout autre élément permettant de stabiliser ladite barre 4. La plaque support 2 peut être en composite, métal, bois, élastomère ou tout autre type de matériau.

En outre, la plaque support 2 peut être recouverte de tout matériau comme par exemple un matériau antidérapant.

Outre cette stabilité conférée à la barre 4, la plaque support 2 permet de limiter l'espace pour la réalisation des gestes chirurgicaux. Ainsi, l'utilisateur se trouve dans des conditions quasi-similaires à la réalité.

Par ailleurs, sur la figure 4 est illustrée une barre 4 de courbure sensiblement similaire à celle d'une mandibule, c'est-à-dire en forme de fer à cheval, et possédant, de surcroît, une section sensiblement triangulaire.

En outre, selon une variante non illustrée de l'invention, la feuille 3 peut être remplacée par une nouvelle feuille 3 après chaque utilisation, de façon à ne pas jeter le dispositif 1.

Selon une possibilité supplémentaire offerte par l'invention, la feuille 3 modélise la paroi d'un vaisseau sanguin et la barre 4 est utilisée comme support de ladite feuille 3. Dans ce contexte, la feuille 3 possède des propriétés analogues à la paroi d'un vaisseau sanguin.

En outre, de façon non limitative la barre 4 peut modéliser un os comme par exemple le fémur. La feuille 3 possède alors des propriétés analogues à celles de l'épiderme.

En résumé, le dispositif 1 de l'invention a notamment pour avantage d'offrir la possibilité aux étudiants, praticiens en chirurgie dentaire, médecine humaine ou animale de s'exercer aux différentes techniques d'incision et de suture tel que par exemple :
- les points séparés :
- les points en O ;
- les points en 8 ;
- les points matelassier vertical et horizontal ;
- les points en croix ; ou
- les sutures continues.

L'invention est décrite dans ce qui précède à titre d'exemple. Il est entendu que l'homme du métier est à même de réaliser différentes variantes du dispositif pédagogique d'incisions et de sutures, en particulier concernant le matériau, l'épaisseur, la disposition, la forme ou l'agencement des différents éléments constituant ledit dispositif sans pour autant sortir du cadre du brevet.

## Revendications

1. Dispositif (1) pédagogique d'incisions et de sutures pour s'exercer aux différentes techniques d'incisions et de sutures pratiquées en chirurgie humaine ou animale **caractérisé en ce que** ledit dispositif (1) comporte :
- une barre (4) présentant une partie supérieure ayant une surface de forme convexe modélisant un élément anatomique tel que par exemple un os, un maxillaire supérieur ou une mandibule ;
- une feuille (3) recouvrant ladite barre (4) ; ladite feuille (3) étant réalisée dans un matériau possédant une texture pour la simulation d'un tissu biologique ; **caractérisé en ce que** ladite feuille étant montée amovible sur ladite barre.
- et **en ce que** au moins un plot (5) disposé sur ladite partie supérieure de ladite barre (4) ou sur une face latérale de ladite barre (4).

2. Dispositif (1) selon l'une des revendications précédentes **caractérisé en ce qu'**il comporte une plaque support (2), ladite barre (4) étant fixée sur ladite plaque support (2).

3. Dispositif (1) selon la revendication 1 **caractérisé en ce qu'**il comporte une plaque support (2), ladite barre (4) étant montée amovible sur ladite plaque support (2).

4. Dispositif (1) selon l'une des revendications précédentes **caractérisé en ce que** ladite barre (4) comporte au moins un trou (6) pour insérer ledit au moins un plot (5).

5. Dispositif (1) selon l'une au moins des revendications précédentes **caractérisé en ce que** ledit au moins un plot (5) est fixé sur ladite barre (4) .

6. Dispositif (1) selon l'une au moins des revendications précédentes **caractérisé en ce que** ledit au moins un plot (5) est monté amovible sur ladite barre (4).

7. Dispositif (1) selon la revendication 1 **caractérisé en ce que** ladite barre (4), ladite plaque support (2) et ledit au moins un plot (5) sont monobloc.

8. Dispositif (1) selon l'une des revendications précédentes **caractérisé en ce que** le matériau de ladite feuille (3) peut être choisi parmi les matériaux suivants :
- élastomère ;
- skaï ;
- tissu ; ou
- plastique.

9. Dispositif (1) selon l'une des revendications précédentes **caractérisé en ce que** ladite feuille (3) possède une épaisseur comprise entre 0,1 et 5 mm et préférentiellement de l'ordre de 0,7 mm.

## Patentansprüche

1. Pädagogische Vorrichtung (1) für Einschnitte und Nähte zur Übung der unterschiedlichen Einschnitt- und Nahttechniken, die in der Chirurgie am Menschen oder am Tier praktiziert werden, **dadurch gekennzeichnet, dass** die genannte Vorrichtung (1) umfasst:
- eine Stange (4), die einen oberen Teil mit einer Oberfläche in konvexer Form, die ein anatomisches Element, wie z. B. einen Knochen, einen Oberkiefer oder einen Unterkiefer als Modell darstellt, aufweist;
- ein die genannte Stange (4) abdeckendes Blatt (3); wobei das genannte Blatt (3) aus einem Material realisiert ist, das eine Textur für die Simulation eines biologischen Gewebes besitzt; **dadurch gekennzeichnet, dass** das genannte Blatt abnehmbar auf der genannten Stange angebracht ist.
- und dass wenigstens ein Stift (5) auf dem genannten oberen Teil der genannten Stange (4) oder auf einer lateralen Seite der genannten Stange (4) angeordnet ist.

2. Vorrichtung (1) gemäß einem der vorgenannten Ansprüche, **dadurch gekennzeichnet, dass** sie eine Trägerplatte (2) umfasst, wobei die genannte Stange (4) auf der genannten Trägerplatte (2) befestigt ist.

3. Vorrichtung (1) gemäß Anspruch 1, **dadurch gekennzeichnet, dass** sie eine Trägerplatte (2) umfasst, wobei die genannte Stange (4) abnehmbar auf der genannten Trägerplatte (2) angebracht ist.

4. Vorrichtung (1) gemäß einem der voranstehenden Ansprüche, **dadurch gekennzeichnet, dass** die genannte Stange (4) wenigstens ein Loch (6) zum Einfügen des genannten wenigstens einen Stifts (5) umfasst.

5. Vorrichtung (1) gemäß wenigstens einem der voranstehenden Ansprüche, **dadurch gekennzeichnet, dass** der genannte wenigstens eine Stift (5) auf der genannten Stange (4) befestigt ist.

6. Vorrichtung (1) gemäß wenigstens einem der voranstehenden Ansprüche, **dadurch gekennzeichnet, dass** der genannte wenigstens eine Stift (5) abnehmbar auf der genannten Stange (4) angebracht ist.

7. Vorrichtung (1) gemäß Anspruch 1, **dadurch gekennzeichnet, dass** die genannte Stange (4), die genannte Trägerplatte (2) und der genannte wenigstens eine Stift (5) aus einem Stück sind.

8. Vorrichtung (1) gemäß einem der voranstehenden Ansprüche, **dadurch gekennzeichnet, dass** das Material des genannten Blattes (3) aus den folgenden Materialien ausgewählt sein kann:
- Elastomer;
- Skai;
- Stoff; oder
- Plastik.

9. Vorrichtung (1) gemäß einem der voranstehenden Ansprüche, **dadurch gekennzeichnet, dass** das genannte Blatt (3) eine zwischen 0,1 und 5 mm inbegriffene Dicke und bevorzugt in der Größenordnung von 0,7 mm hat.

## Claims

1. A pedagogical device (1) for incisions and sutures for training to different techniques of incisions and sutures practiced in human or animal surgery **characterized in that** said device (1) includes:
- a bar (4) having an upper part having a convex-shaped surface modelling an anatomical element such as for example a bone, a maxilla or a mandible;
- a sheet (3) covering said bar (4); said sheet (3) being made of a material having a texture for simulating a biological tissue; **characterized in that** said sheet is removably mounted to said bar;
- and **in that** at least one stud (5) is disposed on said upper part of said bar (4) or on a side face of said bar (4).

2. The device (1) according to one of the preceding claims, **characterized in that** it includes a support plate (2), said bar (4) being fixed to said support plate (2).

3. The device (1) according to claim 1, **characterized in that** it includes a support plate (2), said bar (4) being removably mounted to said support plate (2).

4. The device (1) according to one of the preceding claims, **characterized in that** said bar (4) includes at least one hole (6) for inserting said at least one stud (5).

5. The device (1) according to at least one of the preceding claims, **characterized in that** said at least one stud (5) is fixed to said bar (4).

6. The device (1) according to at least one of the preceding claims, **characterized in that** said at least one stud (5) is removably mounted to said bar (4).

7. The device (1) according to claim 1, **characterized in that** said bar (4), said support plate (2) and said at least one stud (5) are as a single piece.

8. The device (1) according to one of the preceding claims, **characterized in that** the material of said sheet (3) can be chosen from the following materials:
- elastomer;
- skai;
- woven fabric; or
- plastics.

9. The device (1) according to one of the preceding claims, **characterized in that** said sheet (3) has a thickness between 0.1 and 5 mm and preferentially in the order of 0.7 mm.
